# FASCICULE DE BREVET EUROPEEN

(11) **EP 3 656 142 B1**
(45) Date de publication et mention de la délivrance du brevet: **30.08.2023**
(21) Numéro de dépôt: 18759150.8
(22) Date de dépôt: 13.07.2018
(51) Int. Cl.: H04W 8/18, H04W 8/20

(54) **CHARGEMENT D'UN NOUVEAU PROFIL D'ABONNEMENT DANS UN MODULE EMBARQUÉ D'IDENTIFICATION DE SOUSCRIPTEUR**
LADEN EINES NEUEN TEILNEHMERPROFILS IN EIN INTEGRIERTES TEILNEHMERIDENTIFIKATIONSMODUL
LOADING OF A NEW SUBSCRIPTION PROFILE INTO AN EMBEDDED SUBSCRIBER IDENTIFICATION MODULE

(30) Priorité: 19.07.2017 FR 1756854
(43) Date de publication de la demande: 27.05.2020
(73) Titulaire: Orange, 92130 Issy-les-Moulineaux (FR)
(72) Inventeur: LUCAS, Philippe, 92326 Châtillon Cedex (FR); LEMOINE, Christine, 92326 Châtillon Cedex (FR)
(86) Numéro de dépôt international: PCT/FR2018/051780
(87) Numéro de publication internationale: WO 2019/016450

(56) Documents cités:
- EP-A1- 2 747 466
- WO-A1-2016/185129
- US-A1- 2012 117 635
- US-A1- 2014 073 292
- "Smart Cards; Embedded UICC; Requirements Specification (Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP REQ, no. V13.2.0, 1 mai 2016 (2016-05-01), XP014275091,
- Gsm Association: "SGP.21 - RSP Architecture", , 23 December 2015 (2015-12-23), pages 1-52, XP55348935, Retrieved from the Internet: URL:http://www.gsma.com/newsroom/wp-conten t/uploads/SGP.21-v1.01.pdf [retrieved on 2017-02-23]

## Description

La présente invention concerne le domaine des télécommunications mobiles, et plus particulièrement celui des équipements mobiles dans lesquels est intégré un module d'identification de souscripteur de type carte SIM embarquée.

Depuis les premières générations de téléphones mobiles, il est habituel pour un utilisateur d'avoir à insérer une puce, dite carte SIM, dans son téléphone mobile. Cette carte SIM est fournie physiquement à l'utilisateur par l'opérateur d'un réseau de télécommunications mobiles auquel il s'abonne. Lorsqu'elle est fournie à l'utilisateur, cette carte SIM contient déjà en mémoire un profil d'abonnement comprenant des éléments permettant à cet utilisateur de s'authentifier auprès de ce réseau afin d'accéder aux services qu'il propose, en fonction de l'abonnement souscrit. Ainsi, grâce à la séparation physique entre d'une part le téléphone mobile et d'autre part la carte SIM, l'utilisateur peut facilement changer de terminal tout en conservant sa carte SIM, et ainsi rester chez le même opérateur, ou inversement changer d'opérateur, et donc de carte SIM, tout en conservant son terminal.

Depuis quelques années cependant, il existe de plus en plus de terminaux mobiles (que ce soit des téléphones ou des tablettes) dans lequel la carte SIM est intégrée (c'est-à-dire non séparable physiquement du terminal), on parle alors de carte SIM embarquée, ou eSIM. Ce type de technologie a d'abord été employé pour les terminaux M2M (« Machine-to-Machine ») avant d'être utilisée dans les terminaux dits « secondaires » (les montres connectées, par exemple), configurables par l'intermédiaire d'un terminal dit « primaire », tel qu'un smartphone.

Dans le cas d'un terminal « primaire », de type smartphone ou tablette, dans lequel est intégré un module eSIM embarqué, il est nécessaire de télécharger à distance les données secrètes de l'opérateur mobile auquel l'utilisateur a souscrit, afin de permettre l'accès sécurisé au réseau de cet opérateur mobile. Ces données secrètes sont désignées habituellement sous le terme de profil d'abonnement et correspondant à un abonnement d'un utilisateur à l'opérateur mobile.

A titre d'illustration d'un tel téléchargement, la demande de brevet US 2012/0117635 A1 décrit un dispositif dans lequel une « fausse » carte SIM est prévue, celle-ci ne contenant pas en elle-même d'information de type SIM, mais permettant le téléchargement d'informations de type eSIM depuis un serveur eSIM dans un logiciel d'émulation installée dans un circuit intégré de type UICC. Pour ce faire, un code d'activation est imprimé au préalable, de manière statique et définitive, dans le circuit intégré UICC de sorte à pouvoir permettre à un utilisateur rentrant ce code d'activation d'accéder au réseau et de télécharger les données eSIM appropriées.

Un autre exemple de téléchargement de profil est illustré par la demande de brevet US 2014/0073292 A1 décrivant un système de transfert de profil entre deux terminaux, dans lequel une requête de profil utilisateur est transmise d'un terminal cible vers un serveur de gestion, des informations d'identification de l'utilisateur étant transmises afin d'authentifier l'utilisateur associé à cette requête de profil. Le serveur de gestion interagit alors avec un autre serveur afin d'obtenir le profil installé sur un terminal source afin que celui-ci soit téléchargé sur le terminal cible.

Pour sa part, la demande de brevet EP 2 747 466 A1 décrit un procédé d'obtention d'un élément sécurisé dans un terminal mobile avec profil d'abonnement, depuis un serveur du réseau.

Enfin, le document « SGP.21 - RSP Architecture » du GSMA (GSM Association, XP55348935, 23/12/2015) propose un mécanisme de téléchargement de profil d'abonnement, déclenché par un équipement réseau suite à l'action d'un utilisateur sur une interface utilisateur locale.

Afin de récupérer un tel profil d'abonnement, le terminal avec un module eSIM embarqué doit obtenir l'adresse du serveur sur lequel se trouve ce profil d'abonnement ainsi qu'une référence permettant de récupérer ce profil d'abonnement auprès de ce serveur lors d'une pré-configuration préalable. Or, dans un contexte où le client souhaite utiliser son abonnement sur un nouveau terminal, cela peut s'avérer assez fastidieux, l'utilisateur devant choisir l'opérateur pour l'informer de l'utilisation d'un nouveau terminal avec un module eSIM embarqué, puis faire des manipulations complexes avant de pouvoir obtenir cette adresse et cette référence de profil, et procéder au téléchargement du profil d'abonnement dans le module eSIM de son terminal mobile.

La présente invention a pour objet de remédier aux inconvénients précités en matière d'initialisation de terminaux mobiles avec modules eSIM embarqués, dans le cas d'un utilisateur disposant déjà d'un terminal mobile avec carte SIM chez le même opérateur.

Elle propose à cet effet un procédé de téléchargement, dans un module d'identification de souscripteur d'un premier terminal mobile, dit terminal mobile cible, d'un profil d'abonnement, le procédé comprenant les étapes suivantes :
émission, par le terminal mobile cible, d'une requête combinée d'authentification et de transfert de profil vers un système d'authentification, ladite requête contenant un identifiant d'utilisateur du terminal mobile cible ;
réception en retour, par le terminal mobile cible, d'un message de réponse contenant un code d'activation ;
émission, par le terminal mobile cible, d'une requête de téléchargement du profil d'abonnement vers un équipement de provisionnement, ladite requête de téléchargement comprenant le code d'activation ; et
suite à une vérification positive du code d'activation par l'équipement de provisionnement, téléchargement du profil d'abonnement dans le module d'identification de souscripteur du terminal mobile cible.

Dans un mode de réalisation particulièrement avantageux, ce procédé comprend en outre les étapes suivantes, suite à la réception de la requête combinée d'authentification et de transfert de profil par le système d' authentification :
émission, par le système d'authentification, d'une requête d'authentification de l'utilisateur vers un module d'identification de souscripteur d'un deuxième terminal mobile, dit terminal mobile source ;
authentification de l'utilisateur par le module d'identification de souscripteur du terminal mobile source ; et
lorsque le résultat de ladite authentification par le module d'identification de souscripteur du terminal mobile source est positif, préparation du profil d'abonnement par l'équipement de provisionnement.

Avantageusement, ce procédé peut comprendre en outre les étapes suivantes, lorsque le résultat de l'authentification par le module d'identification de souscripteur du terminal mobile source est positif :
émission, par le terminal mobile source, d'une réponse d'authentification positive vers le système d'authentification ; et
émission, par le système d'authentification, d'une requête de préparation de profil vers un équipement de traitement de commande, afin de déclencher la préparation du profil d'abonnement par l'équipement de provisionnement.

Avantageusement, le procédé comprend, suite à la réception de la requête de préparation de profil, l'émission par un équipement de traitement de commande d'une requête de préparation de profil vers l'équipement de provisionnement, déclenchant la préparation du profil d'abonnement par l'équipement de provisionnement.

Dans un mode de réalisation, le procédé comprend en outre, suite à l'authentification positive par le module d'identification souscripteur du terminal mobile source, la génération du code d'activation par l'équipement de traitement de commande et l'insertion dudit code dans la quête de préparation de profil.

Dans un autre mode de réalisation, le procédé comprend en outre, suite à la réception de la requête de préparation de profil par l'équipement de provisionnement, la génération du code d'activation par l'équipement de provisionnement et l'émission vers l'équipement de traitement de commande d'un message contenant ledit code d'activation.

Avantageusement, la requête combinée d'authentification et de transfert de profil contient en outre un identifiant unique du module d'identification de souscripteur du terminal mobile cible, ledit identifiant unique étant mémorisé en association avec le profil d'abonnement par l'équipement de provisionnement, et le procédé comprend en outre la vérification d'une correspondance entre l'identifiant unique mémorisé en association avec le profil d'abonnement par l'équipement de provisionnement et un identifiant unique de module d'identification de souscripteur inséré dans la requête de téléchargement.

Elle propose également un terminal mobile comprenant un module d'identification de souscripteur et un module de traitement apte à installer un profil d'abonnement dans le module d'identification de souscripteur, caractérisé en ce que le module de traitement est configuré pour :
émettre une requête combinée d'authentification et de transfert de profil vers un système d'authentification (30), ladite requête comprenant un identifiant d'utilisateur du terminal mobile ;
recevoir en retour un message de réponse contenant un code d'activation ;
émettre une requête de téléchargement du profil d'abonnement vers un équipement de provisionnement du réseau, ladite requête de téléchargement contenant le code d'activation; et
recevoir en retour le profil d'abonnement.

Elle propose également un système de téléchargement, dans un module d'identification de souscripteur d'un premier terminal mobile, dit terminal mobile cible, d'un profil d'abonnement, le système de téléchargement comprenant :
un premier équipement réseau d'authentification apte à recevoir une requête combinée d'authentification et de transfert de profil provenant du terminal mobile cible, contenant un identifiant d'utilisateur du terminal mobile cible ;
un deuxième équipement réseau d'authentification apte à recevoir une requête d'authentification du premier équipement réseau d'authentification contenant l'identifiant d'utilisateur du terminal mobile cible et configuré pour transmettre une requête d'authentification à un terminal mobile source au moyen de l'identifiant d'utilisateur du terminal mobile cible, afin de déclencher la préparation du profil d'abonnement à télécharger dans le module d'identification de souscripteur ;
un équipement de provisionnement pour stocker le profil d'abonnement apte à recevoir une requête de téléchargement du profil d'abonnement émise par le terminal mobile cible, ladite requête de téléchargement comprenant le code d'activation et agencé pour télécharger, suite à une vérification positive du code d'activation, le profil d'abonnement dans un module d'identification de souscripteur du terminal mobile cible ; et
un équipement de traitement de commande agencé pour transmettre vers le terminal mobile cible, en retour de la requête combinée d'authentification et de transfert de profil, un message de réponse contenant ledit code d'activation et pour instruire à l'équipement de provisionnement de préparer le profil d'abonnement suite à la réception d'une requête de préparation de profil reçue du système d'authentification.

Elle propose aussi un programme d'ordinateur comportant des instructions de code pour la mise en oeuvre des étapes suivantes du procédé de téléchargement ci-avant, lorsque ce programme est exécuté par un processeur d'un terminal mobile :
émission d'une requête combinée d'authentification et de transfert de profil vers un système d'authentification, ladite requête contenant un identifiant d'utilisateur du terminal mobile cible ;
réception en retour d'un message de réponse contenant un code d'activation ; et
émission d'une requête de téléchargement du profil d'abonnement vers un équipement de provisionnement, ladite requête de téléchargement comprenant le code d'activation.

Elle propose en outre un support d'enregistrement, lisible par un terminal mobile, dans lequel est enregistré le programme d'ordinateur ci-avant.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 est un schéma synoptique illustrant un système de télécommunications mobile permettant le téléchargement, dans un module d'un terminal mobile, d'un profil d'abonnement auprès d'un opérateur de télécommunications ;
- la figure 2 illustre les étapes d'un procédé de téléchargement d'un profil d'abonnement dans le module d'identification de souscripteur d'un terminal mobile, selon un mode de réalisation de l'invention ; et
- la figure 3 illustre un terminal mobile selon un mode de réalisation de l'invention.

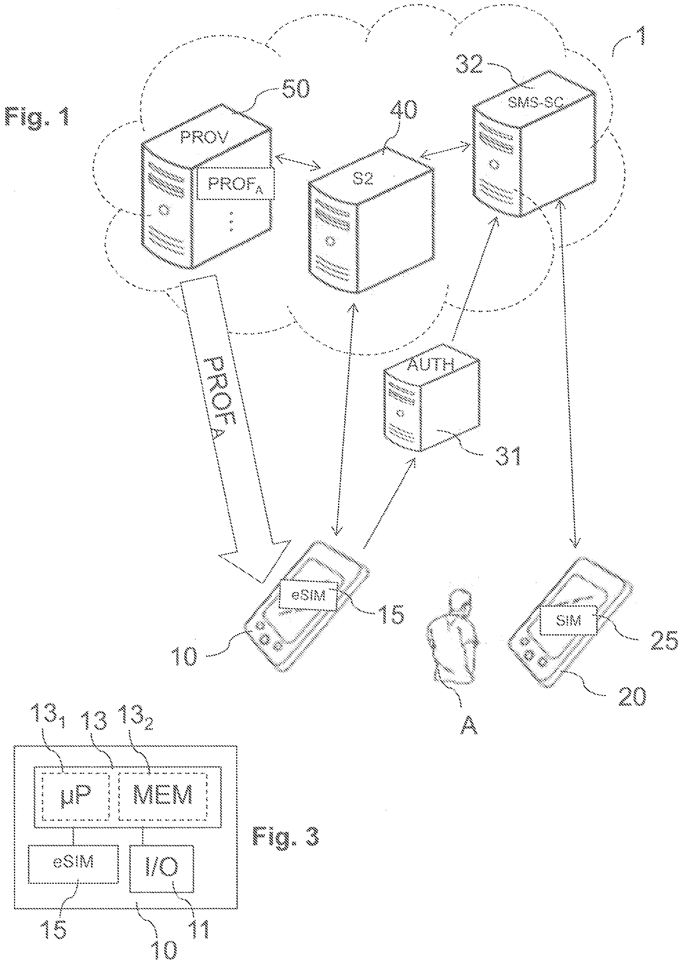

On se réfère tout d'abord à la **figure 1** sur laquelle est illustré un système de télécommunications mobile permettant l'installation, dans un module embarqué d'identification de souscripteur d'un terminal mobile, d'un profil d'abonnement auprès d'un opérateur de télécommunications.

Dans ce système, il est prévu, d'une part, un premier terminal mobile 10 (pouvant être aussi bien un téléphone mobile, un smartphone, une tablette qu'un ordinateur portable, à titre d'exemple), dit terminal mobile cible, comprenant en particulier un module 15 d'identification de souscripteur (typiquement formé par une puce contenant un microcontrôleur associé à une mémoire) installé dans le terminal 10 et destiné à stocker un profil d'abonnement comprenant des informations relatives à un abonné A d'un réseau mobile 1. Un tel module 15 peut être typiquement implémenté sous la forme d'un module embarqué, intégré de manière permanente dans le mobile 10 et non séparable de ce dernier, et désigné habituellement par les termes « embedded SIM » ou « eUICC ». Par la suite, il sera donc considéré que ce module 15 est un module embarqué de type eSIM. Cependant, de manière alternative, ce module 15 peut aussi être un module eUICC extractible.

Il est prévu, d'autre part, un deuxième terminal mobile 20 (pouvant être aussi bien un téléphone mobile, un smartphone, une tablette qu'un ordinateur portable, à titre d'exemple), dit terminal mobile source, comprenant un module 25 d'identification de souscripteur stockant déjà un profil d'abonnement de l'abonné A du réseau mobile, comprenant des informations relatives à l'abonné A au réseau mobile 1. Ces informations peuvent être notamment les identifiants de cet abonné A (par exemple son numéro IMSI) et de l'opérateur de télécommunications mobiles OP auquel il a souscrit (par exemple les numéros MCC et MNC de l'opérateur OP).

Le module 25 d'identification de souscripteur est typiquement un module amovible de type carte SIM. Cependant, on peut également envisager le cas où ce module 25 est un module embarqué de type eSIM.

Par ailleurs, le système 1 comprend un certain nombre d'équipements réseaux 31,32,40,50 permettant le chargement, dans le module embarqué 15 intégré dans le terminal 10, d'un profil d'abonnement PROF_{A} obtenu à partir du profil d'abonnement déjà existant, stocké dans le module 25 du terminal mobile source 20, correspondant à un abonnement souscrit par l'abonné A auprès de son opérateur mobile OP.

En particulier, il est prévu d'une part un premier équipement réseau 50 servant à provisionner des profils d'abonnements, typiquement implémenté sous la forme d'un serveur de provisionnement, dans lequel sont stockés les profils d'abonnement des abonnés à un même opérateur, et notamment ici le profil PROF_{A} de l'abonné A, une fois celui-ci préparé.

Le profil d'abonnement PROF_{A} prend la forme d'un fichier numérique pouvant comporter notamment les éléments d'authentification de l'abonné vis à avis de l'opérateur OP (clé(s) secrète(s) associée(s) à cet abonnement spécifique), le(s) identifiant(s) de l'abonné (par exemple IMSI), ainsi que les services auxquels l'abonné A a souscrit auprès de l'opérateur OP ou auprès d'un fournisseur de services tiers. Lorsqu'il dispose de l'adresse de cet équipement réseau 50, le terminal 10 peut télécharger le profil PROF_{A} depuis cet équipement de provisionnement 50, en émettant une requête à cet effet à destination de l'adresse réseau de cet équipement 50.

Il est également prévu un système d'authentification composé d'un premier équipement réseau d'authentification 31, capable de recevoir des requêtes provenant du terminal mobile cible 10, et d'un deuxième équipement réseau d'authentification 32, capable d'envoyer des requêtes d'authentification au terminal mobile source 20.

Le premier équipement réseau d'authentification 31, typiquement implémenté sous la forme d'un serveur d'authentification, est ainsi prévu pour recevoir une requête combinée d'authentification et de création de profil d'abonnement émise par le terminal 10. Cet équipement réseau 31 n'est pas nécessairement géré par l'opérateur du réseau 1 et peut, au contraire, être avantageusement géré par un tiers à cet opérateur de réseau, auquel cas l'équipement réseau 30 est capable de retransmettre toute requête reçue d'un terminal mobile vers un équipement réseau d'un opérateur identifié au moyen d'un identifiant d'utilisateur inséré dans cette requête.

De manière avantageuse, ce serveur d'authentification peut être un serveur implémentant le mécanisme d'authentification « Mobile Connect » normalisé au GSMA, habituellement utilisé pour authentifier un utilisateur lors de son accès à des services ou sites internet, ici réutilisé non seulement pour authentifier l'utilisateur mais également pour déclencher l'installation d'un profil d'abonnement dans le module d'identification embarqué 15 du terminal mobile 10.

Le deuxième équipement réseau d'authentification 32 est pour sa part capable de relayer une requête d'authentification vers le terminal mobile 20, suite à la réception d'une requête provenant du premier équipement 31. Cet équipement réseau 32 est typiquement implémenté sous la forme d'un serveur, par exemple un serveur SMS-SC, auquel cas la requête d'authentification transmis au terminal 20 peut être implémentée sous la forme d'un SMS de commande, invisible pour l'utilisateur du terminal 20, pouvant être interprété par le module d'identification de souscripteur 25 du terminal mobile source 20.

Il est prévu en outre un autre équipement réseau 40, dit équipement de traitement de commande, typiquement implémenté sous la forme d'un serveur et capable d'interagir avec les deux équipements réseaux 32 et 40 pour préparer le profil d'abonnement à télécharger dans le terminal 10, ainsi qu'avec le terminal 10 pour lui fournir des informations destinées à permettre ce téléchargement.

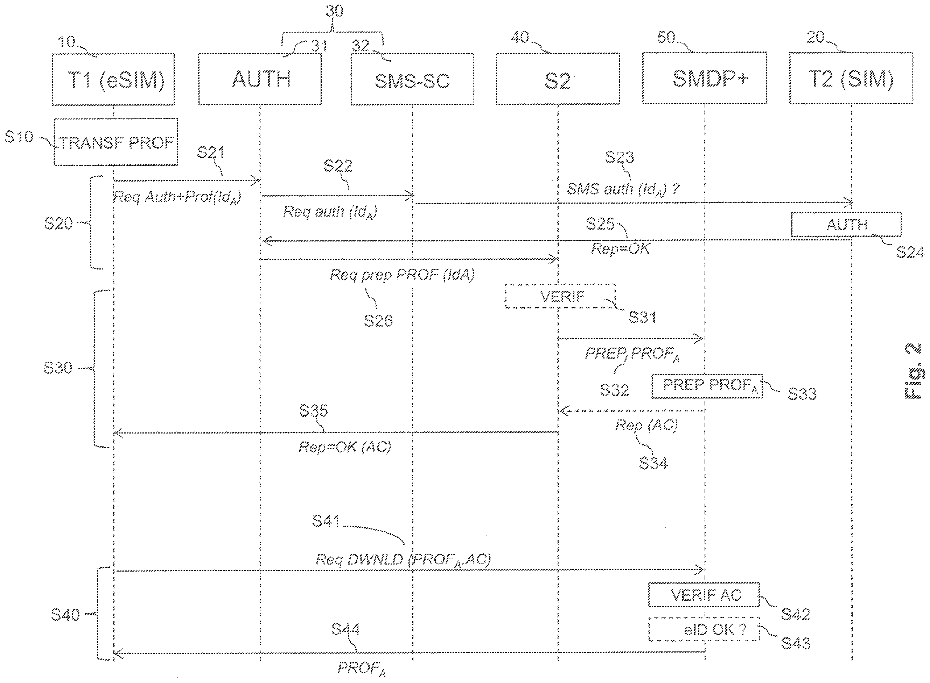

On se réfère à présent à la **figure 2** sur laquelle est illustré un procédé de chargement de profil d'abonnement selon un premier mode de réalisation de l'invention.

Dans ce procédé, un utilisateur A a souscrit au préalable un abonnement auprès d'un opérateur mobile OP, afin de lui permettre d'accéder à des services offerts par cet opérateur au moyen d'un premier terminal mobile 20. Il dispose donc d'un profil d'abonnement stocké dans le module 25 d'identification de souscripteur (ici une carte SIM à titre illustratif), ainsi que dans un équipement réseau de l'opérateur (par exemple un HLR).

Disposant également d'un deuxième terminal mobile 10 avec module d'identification 15 (ici un module embarqué de type eSIM, à titre illustratif), cet utilisateur A souhaite créer un nouveau profil d'abonnement PROF_{A} à télécharger dans ce module embarqué 15.

Pour ce faire, le terminal mobile 10 établit au préalable une connexion avec le réseau internet, par exemple par le biais d'une connexion WiFi à un point d'accès, d'une connexion bluetooth à un autre dispositif ayant son propre accès internet, voire en utilisant une connexion cellulaire dite « Bootstrap ».

Une fois la connexion à internet du terminal 10 établie, l'utilisateur A peut déclencher le processus d'installation du profil d'abonnement dans le module embarqué 15 au moyen de son terminal mobile 10 (étape S10), par exemple au moyen d'un menu proposant une option de transfert ou d'extension d'abonnement, depuis un abonnement SIM ou eSIM initial vers un abonnement eSIM cible, ou permettant de se connecter au compte client de l'utilisateur au moyen d'un couple identifiant/mot de passe ou encore au moyen de la solution d'authentification « Mobile Connect ».

Suite au déclenchement de ce processus d'installation par l'utilisateur A, une première phase d'authentification est déclenchée (phase S20).

Au cours de cette phase d'authentification, le terminal 10 transmet au système d'authentification 30 une requête combinée d'authentification et de création de nouveau profil (étape S21) contenant notamment un identifiant Id_{A} de l'utilisateur A, typiquement son numéro de téléphone. Avantageusement, cette requête peut également contenir un identifiant unique du module d'identification embarqué 15, par exemple un identifiant de type « eID » (pour « eUICC identifier ») tel que défini au GSMA.

Dans le mode de réalisation illustré ici, ce système d'authentification 30 comprend un premier équipement d'authentification 31, capable de recevoir les requêtes combinées d'authentification et de création de nouveau profil provenant d'un terminal mobile cible tel que le terminal 10, associé à un deuxième équipement d'authentification 32, capable de transmettre des requêtes d'authentification vers un terminal mobile source, tel que le terminal 20. Un tel système d'authentification peut en particulier être basé sur le mécanisme « Mobile Connect » normalisé au GSMA, auquel cas l'équipement 31 est un équipement géré par un tiers à l'opérateur du réseau et l'équipement 32 est un serveur SMS-SC du réseau de cet opérateur.

Dans un tel cas, suite à la réception de cette requête par l'équipement d'authentification 31, cet équipement déduit, à partir de l'identifiant Id_{A} de l'utilisateur A, l'adresse de l'équipement d'authentification 32 du réseau auquel est abonné l'utilisateur A et transmet une requête d'authentification contenant cet identifiant Id_{A} à cet équipement d'authentification 32, ici implémenté sous la forme d'un serveur SMS-SC (étape S22).

Après avoir reçu une telle requête, le serveur SMS-SC transmet une requête d'authentification, ici un SMS de commande, au terminal 20 (étape S23) afin que ce le module d'identification de souscripteur 25 procède automatiquement à l'authentification de l'utilisateur A(étape S24), typiquement au moyen des données stockées dans ce module 25 et de l'identifiant Id_{A} reçu.

Si le résultat de cette authentification par le module 25 est bien positif, le terminal 20 retourne un message de réponse d'authentification positif au système d'authentification 30 (étape S25), ici au premier équipement 31 d'un tel système, pour que ce dernier instruise à un équipement de traitement de commande 40 du réseau de l'opérateur de déclencher la préparation du nouveau profil d'abonnement PROF_{A} destiné à être transmis au terminal 10 pour installation dans son module embarqué 15.

Ce message de réponse d'authentification positif peut prendre la forme d'un SMS de réponse d'authentification positif transmis par le terminal 20 au serveur SMS-SC 32, en réponse à la requête d'authentification. Après réception de cette réponse, le serveur SMS-SC transmet cette réponse vers l'équipement d'authentification 31, par exemple en convertissant ce SMS de réponse en un message de réponse d'authentification positif interprétable par l'équipement 31.

Cet équipement 31 peut alors déduire l'adresse de l'équipement de traitement de commande 40 et transmettre (étape S26) une requête de préparation de profil à l'équipement de traitement de commande 40, contenant l'identifiant Id_{A} de l'utilisateur A, ainsi qu'éventuellement l'identifiant unique du module 15 (e.g. son eID).

Après avoir reçu cette requête de préparation de profil, l'équipement de traitement de commande 40 déclenche une phase de préparation du profil d'abonnement PROF_{A} et d'un code d'activation AC associé à ce profil (phase S30).

Pour ce faire, l'équipement de traitement de commande 40 peut, au préalable et de manière avantageuse, vérifier (étape S31) que le terminal 10 a bien le droit de demander la création d'un nouveau profil d'abonnement. Une telle vérification peut consister à vérifier l'éligibilité à un tel service de l'utilisateur A, voire vérifier si son identifiant Id_{A} ne fait pas partie d'une liste noire d'identifiants ne pouvant pas bénéficier d'un tel service.

Si cette vérification s'avère positive, ou en l'absence de telle vérification si cette opération n'est pas implémentée, l'équipement de traitement de commande 40 envoie une requête de préparation du profil d'abonnement PROF_{A} à l'équipement de provisionnement 50 (étape S32), ici implémenté sous la forme d'un serveur SMDP+.

Dans un mode de réalisation, l'équipement 40 génère également à ce stade un code d'activation AC, à associer au profil d'abonnement PROF_{A} à générer, et insère ce code dans la requête de préparation avant de transmettre cette requête à l'équipement de provisionnement 50.

Dans un cas particulièrement avantageux, ce code d'activation AC peut contenir l'adresse de l'équipement de provisionnement 50 qui prépare et stocke le profil d'abonnement PROF_{A}, ainsi qu'éventuellement d'autres éléments tels qu'un identifiant de correspondance (« matching ID » et un code de confirmation optionnel.

Cette requête de préparation peut ainsi comprendre les identifiants du module embarqué 15 (e.g. EID) s'ils ont été reçus précédemment, ou s'ils sont déjà connus, et/ou du terminal 10 (e.g. son IMEI), voire n'importe quelle combinaison de ces identifiants, afin notamment de permettre à l'opérateur d'associer le profil d'abonnement PROF_{A} préparé spécifiquement pour le module embarqué 15 avec l'abonné A en particulier. La fourniture de l'identifiant du module embarqué 15 (e.g. EID) permet de préparer le profil d'abonnement pour un module embarqué 15 dédié, et ainsi de sécuriser le processus en permettant l'envoi du profil exclusivement à l'eSIM de cet eID.

Après avoir reçu cette requête, l'équipement de provisionnement 50 prépare (étape S33) l'opérateur un nouveau profil d'abonnement PROF_{A}. Les données de ce nouveau profil peuvent être associées à l'abonnement existant pour l'utilisateur A par l'opérateur auprès du HLR dans lequel les données de l'abonnement existant sont déjà enregistrées, par exemple au travers du compte client ou du MSISDN identifiant la souscription de l'utilisateur A.

A ce stade, dans un mode de réalisation où le code d'activation n'a pas déjà été généré et inséré dans la requête de préparation par l'équipement de traitement de commande 40, ce code d'activation AC peut être généré par l'équipement de provisionnement 50 et transmis à l'équipement de traitement de commande 40 (étape S34).

Ainsi, quel que soit l'équipement ayant généré ce code d'activation AC, celui-ci est partagé par les équipements 40 et 50 à l'issue de ces étapes S31 à S33.

Une fois ce code d'activation AC généré et partagé entre les équipements 40 et 50, le nouveau profil d'abonnement PROF_{A} est stocké en mémoire par l'équipement de provisionnement 50, en association avec le code d'activation AC correspondant, dans l'attente d'une éventuelle requête ultérieure de téléchargement de ce profil.

L'équipement de traitement de commande 40 retourne alors (étape S35) au terminal 10 un message de réponse, positif, contenant le code d'activation AC ainsi que l'adresse de l'équipement de provisionnement 40 où se trouve stocké le profil PROF_{A} (éventuellement incluse dans le code d'activation AC).

Une fois qu'il a reçu ce message de réponse, le terminal 10 peut alors déclencher une phase de téléchargement du profil d'abonnement (phase S40).

Au cours de cette phase de téléchargement, le terminal 10 transmet une requête de téléchargement à l'équipement de provisionnement 50 (étape S41), au moyen de l'adresse de cet équipement 50 qu'il a reçu précédemment de l'équipement 40, éventuellement extraite du code d'activation AC si elle est incluse dans ce code, et en utilisant cette adresse pour transmettre cette requête.

Cette requête de téléchargement contient en particulier le code d'activation AC qu'il a reçu précédemment de l'équipement de traitement de commande 40, ainsi qu'optionnellement l'identifiant unique du module embarqué 15 (e.g. son eID).

L'équipement de provisionnement 50 peut alors vérifier l'adéquation entre le code d'activation AC reçu du terminal 10 et le code d'activation AC précédemment associé au profil d'abonnement PROF_{A} qu'il a en mémoire (étape S42).

En outre, lorsqu'un identifiant unique de module embarqué a été associé préalablement au profil PROF_{A}, le serveur de provisionnement 50 peut également vérifier la correspondance entre cet identifiant unique préalablement associé au profil et un identifiant unique de module embarqué inséré par le terminal 10 dans la requête de téléchargement (étape optionnelle S43).

Lorsque cette ou ces vérification(s) s'avère(nt) positive(s), l'équipement de provisionnement 50 envoie au terminal 10 le fichier du profil d'abonnement PROF_{A} (étape S44), que le terminal 10 peut alors mémoriser et installer dans son module d'identification embarqué 15.

Le terminal 10 dispose alors, au sein de son module embarqué 15, des données nécessaires pour permettre à son utilisateur d'accéder au réseau mobile et aux services auxquels il est abonné via ce réseau.

A ce stade, l'abonné A dispose des deux terminaux « primaires » 10 et 20 avec des profils d'abonnements actifs lui permettant d'accéder au réseau mobile avec n'importe lequel de ces terminaux, se trouvant ainsi dans une configuration dite « multi-SIM » lui permettant notamment de garder son terminal mobile 20 en backup de son terminal 10.

Alternativement, une fois le profil d'abonnement PROF_{A} installé dans le terminal 10, le profil d'abonnement associé au module d'identification 25 du terminal mobile source 20 peut être désactivé, soit après validation par l'utilisateur, soit automatiquement depuis un équipement du réseau qui envoie une instruction au HLR dans lequel ce profil d'abonnement est mémorisé pour le désactiver.

On se réfère à présent à la **figure 3** qui illustre un terminal mobile selon un mode de réalisation de l'invention.

Ce terminal mobile 10 comprend :
- un module 11 de communication, typiquement implémenté sous la forme d'une interface radio, servant à connecter le terminal 10 à un réseau de communication mobile, pour notamment transmettre des messages telles que les requêtes décrites précédemment, générées par le module 13 de traitement, vers les équipements réseaux 20 à 40 et recevoir des réponses de ces équipements pour les fournir au module 13 pour traitement, ainsi que le profil PROF_{A} à charger dans le module embarqué 15 ci-après ;
- un module 13 de traitement, typiquement implémenté matériellement par un processeur 13₁ associé à une mémoire 13₂ (elle-même constituée par une mémoire vive et une mémoire morte, par exemple), configuré pour générer les requêtes décrites précédemment, destinées à être transmises aux équipements réseaux 20 à 40, et pour traiter les réponses à ces requêtes reçues de ces équipements ;
- un module 15 d'identification de souscripteur embarqué, typiquement formé par une puce contenant un microcontrôleur et une mémoire, intégré dans le terminal 10 et destiné à stocker des informations relatives à un abonné A d'un réseau mobile, telles que les identifiants de cet abonné A (i.e. son numéro IMSI) et de l'opérateur de télécommunications mobiles OP auquel il a souscrit (par exemple les numéros MCC et MNC de l'opérateur OP). Un tel module 15, non séparable du terminal 10 au contraire d'une carte SIM classique, est désigné habituellement par les termes « embedded SIM » ou « eUICC ».

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention définie dans les revendications.

## Revendications

1. Procédé de téléchargement, dans un module d'identification de souscripteur (15) d'un premier terminal mobile (10), dit terminal mobile cible, d'un profil d'abonnement (PROF_{A}), le procédé comprenant les étapes suivantes :
émission (S21), par le terminal mobile cible, d'une requête combinée d'authentification et de transfert de profil vers un système d'authentification (30), ladite requête contenant un identifiant d'utilisateur (Id_{A}) du terminal mobile cible ;
réception (S35) en retour, par le terminal mobile cible, d'un message de réponse contenant un code d'activation (AC) ;
émission (S41), par le terminal mobile cible, d'une requête de téléchargement du profil d'abonnement vers un équipement de provisionnement (50), ladite requête de téléchargement comprenant le code d'activation ; et
suite à une vérification (S42) positive du code d'activation par l'équipement de provisionnement, téléchargement (S44) du profil d'abonnement dans le module d'identification de souscripteur (15) du terminal mobile cible.

2. Procédé selon la revendication 1, comprenant en outre les étapes suivantes, suite à la réception de la requête combinée d'authentification et de transfert de profil par le système d'authentification (30) :
émission (S23), par le système d'authentification (30), d'une requête d'authentification de l'utilisateur vers un module d'identification de souscripteur (25) d'un deuxième terminal mobile, dit terminal mobile source (20) ;
authentification (S24) de l'utilisateur par le module d'identification de souscripteur (25) du terminal mobile source ; et
lorsque le résultat de ladite authentification par le module d'identification de souscripteur (25) du terminal mobile source est positif, préparation (S33) du profil d'abonnement par l'équipement de provisionnement (50).

3. Procédé selon la revendication 2, comprenant en outre les étapes suivantes, lorsque le résultat de l'authentification par le module d'identification de souscripteur (25) du terminal mobile source est positif :
émission (S25), par le terminal mobile source (20), d'une réponse d'authentification positive quête vers le système d'authentification (S30) ; et
émission (S26), par le système d'authentification (S30), d'une requête de préparation de profil vers un équipement de traitement de commande (40), afin de déclencher la préparation (S33) du profil d'abonnement par l'équipement de provisionnement (50).

4. Procédé selon la revendication 3, comprenant en outre, suite à la réception (S26) de la requête de préparation de profil, l'émission (S32) par l'équipement de traitement de commande (40) d'une requête de préparation de profil vers l'équipement de provisionnement (50), déclenchant la préparation (S33) du profil d'abonnement par l'équipement de provisionnement (50).

5. Procédé selon l'une des revendications 2 à 4, comprenant en outre, suite à l'authentification positive par le module d'identification souscripteur (25) du terminal mobile source, la génération du code d'activation (AC) par l'équipement de traitement de commande (40) et l'insertion dudit code d'activation dans la requête de préparation de profil.

6. Procédé selon l'une des revendications 2 à 4, comprenant en outre, suite à la réception (S32) de la requête de préparation de profil par l'équipement de provisionnement (50), la génération du code d'activation (AC) par l'équipement de provisionnement et l'émission (S34) vers l'équipement de traitement de commande d'un message de réponse contenant ledit code d'activation.

7. Procédé selon l'une des revendications 1 à 6, dans lequel la requête combinée d'authentification et de transfert de profil contient en outre un identifiant unique (eID) du module d'identification de souscripteur (15) du terminal mobile cible, ledit identifiant unique étant mémorisé en association avec le profil d'abonnement par l'équipement de provisionnement (50),
le procédé comprenant en outre la vérification (S43) d'une correspondance entre l'identifiant unique mémorisé en association avec le profil d'abonnement par l'équipement de provisionnement et un identifiant unique de module d'identification de souscripteur inséré dans la requête de téléchargement.

8. Terminal mobile (10) comprenant un module d'identification de souscripteur (15) et un module de traitement (13) apte à installer un profil d'abonnement (PROF_{A}) dans le module d'identification de souscripteur, **caractérisé en ce que** le module de traitement est configuré pour :
émettre une requête combinée d'authentification et de transfert de profil vers un système d'authentification (30), ladite requête comprenant un identifiant d'utilisateur (Id_{A}) du terminal mobile ;
recevoir en retour un message de réponse contenant un code d'activation (AC) ;
émettre une requête de téléchargement du profil d'abonnement (PROF_{A}) vers un équipement de provisionnement (50) du réseau, ladite requête de téléchargement contenant le code d'activation (AC) ; et
recevoir en retour le profil d'abonnement (PROF_{A}).

9. Système de téléchargement, dans un module d'identification de souscripteur (15) d'un premier terminal mobile (10), dit terminal mobile cible, d'un profil d'abonnement (PROF_{A}), le système de téléchargement comprenant :
un premier équipement réseau d'authentification (31) apte à recevoir une requête combinée d'authentification et de transfert de profil provenant du terminal mobile cible, contenant un identifiant d'utilisateur (Id_{A}) du terminal mobile cible ;
un deuxième équipement réseau d'authentification (32) apte à recevoir une requête d'authentification du premier équipement réseau d'authentification (31) contenant l'identifiant d'utilisateur (Id_{A}) du terminal mobile cible et configuré pour transmettre une requête d'authentification à un terminal mobile source (20) au moyen de l'identifiant d'utilisateur du terminal mobile cible, afin de déclencher la préparation du profil d'abonnement (PROF_{A}) à télécharger dans le module d'identification de souscripteur (15) ;
un équipement de provisionnement (50) pour stocker le profil d'abonnement (PROF_{A}) apte à recevoir une requête de téléchargement du profil d'abonnement émise par le terminal mobile cible, ladite requête de téléchargement comprenant le code d'activation et agencé pour télécharger (S44), suite à une vérification (S42) positive du code d'activation, le profil d'abonnement (PROF_{A}) dans un module d'identification de souscripteur (15) du terminal mobile cible ; et
un équipement de traitement de commande (40) agencé pour transmettre (S35) vers le terminal mobile cible, en retour de la requête combinée d'authentification et de transfert de profil, un message de réponse contenant ledit code d'activation (AC) et pour instruire à l'équipement de provisionnement (50) de préparer le profil d'abonnement suite à la réception d'une requête de préparation de profil reçue du système d'authentification (30).

10. Programme d'ordinateur comportant des instructions de code pour la mise en oeuvre des étapes suivantes du procédé de téléchargement selon la revendication 1, lorsque ce programme est exécuté par un processeur d'un terminal mobile :
émission (S21) d'une requête combinée d'authentification et de transfert de profil vers un système d'authentification (30), ladite requête contenant un identifiant d'utilisateur (Id_{A}) du terminal mobile cible ;
réception (S35) en retour d'un message de réponse contenant un code d'activation (AC) ; et
émission (S41) d'une requête de téléchargement du profil d'abonnement vers un équipement de provisionnement (50), ladite requête de téléchargement comprenant le code d'activation.

11. Support d'enregistrement, lisible par un terminal mobile, dans lequel est enregistré le programme d'ordinateur selon la revendication 10.

## Patentansprüche

1. Verfahren zum Herunterladen eines Abonnementprofils (PROF_{A}) in ein Teilnehmeridentifikationsmodul (15) eines ersten mobilen Endgeräts (10), mobiles Zielendgerät genannt, wobei das Verfahren die folgenden Schritte enthält:
Senden (S21) einer kombinierten Authentifizierungs- und Profilübertragungsanfrage durch das mobile Zielendgerät an ein Authentifizierungssystem (30), wobei die Anfrage eine Benutzerkennung (Id_{A}) des mobilen Zielendgeräts enthält;
Empfang (S35), im Gegenzug, einer einen Aktivierungscode (AC) enthaltenden Antwortnachricht durch das mobile Zielendgerät;
Senden (S41) einer Herunterladeanfrage des Abonnementprofils an eine Bereitstellungsausrüstung (50) durch das mobile Zielendgerät, wobei die Herunterladeanfrage den Aktivierungscode enthält; und
nach einer positiven Überprüfung (S42) des Aktivierungscodes durch die Bereitstellungsausrüstung, Herunterladen (S44) des Abonnementprofils in das Teilnehmeridentifikationsmodul (15) des mobilen Zielendgeräts.

2. Verfahren nach Anspruch 1, das außerdem die folgenden Schritte nach dem Empfang der kombinierten Authentifizierungs- und Profilübertragungsanfrage durch das Authentifizierungssystem (30) enthält:
Senden (S23) einer Authentifizierungsanfrage des Benutzers an ein Teilnehmeridentifikationsmodul (25) eines zweiten mobilen Endgeräts, mobiles Quell-Endgerät (20) genannt, durch das Authentifizierungssystem (30);
Authentifizierung (S24) des Benutzers durch das Teilnehmeridentifikationsmodul (25) des mobilen Quell-Endgeräts; und
wenn das Ergebnis der Authentifizierung durch das Teilnehmeridentifikationsmodul (25) des mobilen Quell-Endgeräts positiv ist, Erstellung (S33) des Abonnementprofils durch die Bereitstellungsausrüstung (50) .

3. Verfahren nach Anspruch 2, das außerdem, wenn das Ergebnis der Authentifizierung durch das Teilnehmeridentifikationsmodul (25) des mobilen Quell-Endgeräts positiv ist, die folgenden Schritte enthält:
Senden (S25) einer positiven Authentifizierungsantwort an das Authentifizierungssystem (S30) durch das mobile Quell-Endgerät (20); und
Senden (S26) einer Profilerstellungsanfrage an eine Befehlsverarbeitungsausrüstung (40) durch das Authentifizierungssystem (S30), um die Erstellung (S33) des Abonnementprofils durch die Bereitstellungsausrüstung (50) auszulösen.

4. Verfahren nach Anspruch 3, das außerdem nach dem Empfang (S26) der Profilerstellungsanfrage das Senden (S32) einer Profilerstellungsanfrage an die Bereitstellungsausrüstung (50) durch die Befehlsverarbeitungsausrüstung (40) enthält, die die Erstellung (S33) des Abonnementprofils durch die Bereitstellungsausrüstung (50) auslöst.

5. Verfahren nach einem der Ansprüche 2 bis 4, das außerdem nach der positiven Authentifizierung durch das Teilnehmeridentifikationsmodul (25) des mobilen Quell-Endgeräts die Erzeugung des Aktivierungscodes (AC) durch die Befehlsverarbeitungsausrüstung (40) und die Einfügung des Aktivierungscodes in die Profilerstellungsanfrage enthält.

6. Verfahren nach einem der Ansprüche 2 bis 4, das außerdem nach dem Empfang (S32) der Profilerstellungsanfrage durch die Bereitstellungsausrüstung (50) die Erzeugung des Aktivierungscodes (AC) durch die Bereitstellungsausrüstung und das Senden (S34) einer den Aktivierungscode enthaltenden Antwortnachricht an die Befehlsverarbeitungsausrüstung enthält.

7. Verfahren nach einem der Ansprüche 1 bis 6, wobei die kombinierte Authentifizierungs- und Profilübertragungsanfrage außerdem eine einzige Kennung (eID) des Teilnehmeridentifikationsmoduls (15) des mobilen Zielendgeräts enthält, wobei die einzige Kennung zusammen mit dem Abonnementprofil durch die Bereitstellungsausrüstung (50) gespeichert wird,
wobei das Verfahren außerdem die Überprüfung (S43) einer Entsprechung zwischen der durch die Bereitstellungsausrüstung zusammen mit dem Abonnementprofil gespeicherten einzigen Kennung und einer einzigen Kennung eines Teilnehmeridentifikationsmoduls enthält, die in die Herunterladeanfrage eingefügt ist.

8. Mobiles Endgerät (10), das ein Teilnehmeridentifikationsmodul (15) und ein Verarbeitungsmodul (13) enthält, das geeignet ist, ein Abonnementprofil (PROF_{A}) im Teilnehmeridentifikationsmodul zu installieren, **dadurch gekennzeichnet, dass** das Verarbeitungsmodul konfiguriert ist, um:
eine kombinierte Authentifizierungs- und Profilübertragungsanfrage an ein Authentifizierungssystem (30) zu senden, wobei die Anfrage eine Benutzerkennung (Id_{A}) des mobilen Endgeräts enthält;
im Gegenzug eine einen Aktivierungscode (AC) enthaltende Antwortnachricht zu empfangen;
eine Herunterladeanfrage des Abonnementprofils (PROF_{A}) an eine Bereitstellungsausrüstung (50) des Netzes zu senden, wobei die Herunterladeanfrage den Aktivierungscode (AC) enthält; und
im Gegenzug das Abonnementprofil (PROF_{A}) zu empfangen.

9. System zum Herunterladen eines Abonnementprofils (PROF_{A}) in ein Teilnehmeridentifikationsmodul (15) eines ersten mobilen Endgeräts (10), mobiles Zielendgerät genannt, wobei das Herunterladesystem enthält:
eine erste Authentifizierungsnetzausrüstung (31), die geeignet ist, eine vom mobilen Zielendgerät kommende kombinierte Authentifizierungs- und Profilübertragungsanfrage zu empfangen, die eine Benutzerkennung (Id_{A}) des mobilen Zielendgeräts enthält;
eine zweite Authentifizierungsnetzausrüstung (32), die geeignet ist, eine Authentifizierungsanfrage der ersten Authentifizierungsnetzausrüstung (31) zu empfangen, die die Benutzerkennung (Id_{A}) des mobilen Zielendgeräts enthält und konfiguriert ist, eine Authentifizierungsanfrage an ein mobiles Quell-Endgerät (20) mittels der Benutzerkennung des mobilen Zielendgeräts zu übertragen, um die Erstellung des in das Teilnehmeridentifikationsmodul (15) herunterzuladenden Abonnementprofils (PROF_{A}) auszulösen;
eine Bereitstellungsausrüstung (50) zum Speichern des Abonnementprofils (PROF_{A}), die geeignet ist, eine durch das mobile Zielendgerät gesendete Herunterladeanfrage des Abonnementprofils zu empfangen, wobei die Herunterladeanfrage den Aktivierungscode enthält und eingerichtet ist, um nach einer positiven Überprüfung (S42) des Aktivierungscodes das Abonnementprofil (PROF_{A}) in ein Teilnehmeridentifikationsmodul (15) des mobilen Zielendgeräts herunterzuladen (S44); und
eine Befehlsverarbeitungsausrüstung (40), die eingerichtet ist, um im Gegenzug zur kombinierten Authentifizierungs- und Profilübertragungsanfrage eine den Aktivierungscode (AC) enthaltende Antwortnachricht an das mobile Zielendgerät zu übertragen (S35), und um die Bereitstellungsausrüstung (50) anzuweisen, das Abonnementprofil nach dem Empfang einer vom Authentifizierungssystem (30) empfangenen Profilerstellungsanfrage zu erstellen.

10. Computerprogramm, das Codeanweisungen zur Durchführung der folgenden Schritte des Herunterladeverfahrens nach Anspruch 1 aufweist, wenn dieses Programm von einem Prozessor eines mobilen Endgeräts ausgeführt wird:
Senden (S21) einer kombinierten Authentifizierungs- und Profilübertragungsanfrage an ein Authentifizierungssystem (30), wobei die Anfrage eine Benutzerkennung (Id_{A}) des mobilen Zielendgeräts enthält; im Gegenzug Empfang (S35) einer einen Aktivierungscode (AC) enthaltenden Antwortnachricht; und
Senden (S41) einer Herunterladeanfrage des Abonnementprofils an eine Bereitstellungsausrüstung (50), wobei die Herunterladeanfrage den Aktivierungscode enthält.

11. Speicherträger, lesbar von einem mobilen Endgerät, auf dem das Computerprogramm nach Anspruch 10 gespeichert ist.

## Claims

1. Method for downloading, into a subscriber identification module (15) of a first mobile terminal (10), called target mobile terminal, a subscription profile (PROF_{A}), the method comprising the following steps:
sending (S21), by the target mobile terminal, of a combined authentication and profile transfer request to an authentication system (30), said request containing a user identifier (Id_{A}) of the target mobile terminal;
reception (S35) in return, by the target mobile terminal, of a response message containing an activation code (AC); sending (S41), by the target mobile terminal, of a request to download the subscription profile to a provisioning equipment item (50), said download request comprising the activation code; and
following a positive verification (S42) of the activation code by the provisioning equipment item, downloading (S44) of the subscription profile into the subscriber identification module (15) of the target mobile terminal.

2. Method according to Claim 1, also comprising the following steps, following the reception of the combined authentication and profile transfer request by the authentication system (30):
sending (S23), by the authentication system (30), of a user authentication request to a subscriber identification module (25) of a second mobile terminal, called source mobile terminal (20);
authentication (S24) of the user by the subscriber identification module (25) of the source mobile terminal; and
when the result of said authentication by the subscriber identification module (25) of the source mobile terminal is positive, preparation (S33) of the subscription profile by the provisioning equipment item (50).

3. Method according to Claim 2, also comprising the following steps, when the result of the authentication by the subscriber identification module (25) of the source mobile terminal is positive:
sending (S25), by the source mobile terminal (20), of a positive authentication response to the authentication system (S30); and
sending (S26), by the authentication system (S30) of a profile preparation request to a control processing equipment item (40), in order to trigger the preparation (S33) of the subscription profile by the provisioning equipment item (50).

4. Method according to Claim 3, also comprising, following the reception (S26) of the profile preparation request, the sending (S32) by the control processing equipment item (40) of a profile preparation request to the provisioning equipment item (50), triggering the preparation (S33) of the subscription profile by the provisioning equipment item (50).

5. Method according to one of Claims 2 to 4, also comprising following the positive authentication by the subscriber identification module (25) of the source mobile terminal, the generation of the activation code (AC) by the control processing equipment item (40) and the insertion of said activation code into the profile preparation request.

6. Method according to one of Claims 2 to 4, also comprising, following the reception (S32) of the profile preparation request by the provisioning equipment item (50), the generation of the activation code (AC) by the provisioning equipment item and the sending (S34) to the control processing equipment item of a response message containing said activation code.

7. Method according to one of Claims 1 to 6, wherein the combined authentication and profile transfer request also contains a unique identifier (eID) of the subscriber identification module (15) of the target mobile terminal, said unique identifier being stored in association with the subscription profile by the provisioning equipment item (50),
the method also comprising the verification (S43) of a match between the unique identifier stored in association with the subscription profile by the provisioning equipment item and a unique identifier of the subscriber identification module inserted into the download request.

8. Mobile terminal (10) comprising a subscriber identification module (15) and a processing module (13) capable of installing a subscription profile (PROF_{A}) in the subscriber identification module, **characterized in that** the processing module is configured to:
send a combined authentication and profile transfer request to an authentication system (30), said request comprising a user identifier (Id_{A}) of the mobile terminal; receive in return a response message containing an activation code (AC);
send a request to download the subscription profile (PROF_{A}) to a provisioning equipment item (50) of the network, said download request containing the activation code (AC); and
receive in return the subscription profile (PROF_{A}).

9. System for downloading, into a subscriber identification module (15) of a first mobile terminal (10), called target mobile terminal, of a subscription profile (PROF_{A}), the downloading system comprising:
a first authentication network equipment item (31) capable of receiving a combined authentication and profile transfer request originating from the target mobile terminal, containing a user identifier (Id_{A}) of the target mobile terminal;
a second authentication network equipment item (32) capable of receiving an authentication request from the first authentication network equipment item (31) containing the user identifier (Id_{A}) of the target mobile terminal and configured to transmit an authentication request to a source mobile terminal (20) by means of the user identifier of the target mobile terminal, in order to trigger the preparation of the subscription profile (PROF_{A}) to be downloaded into the subscriber identification module (15);
a provisioning equipment item (50) for storing the subscription profile (PROF_{A}) capable of receiving a request to download the subscription profile sent by the target mobile terminal, said download request comprising the activation code and arranged to download (S44), following a positive verification (S42) of the activation code, the subscription profile (PROF_{A}) into a subscriber identification module (15) of the target mobile terminal; and
a control processing equipment item (40) arranged to transmit (S35) to the target mobile terminal, in return to the combined authentication and profile transfer request, a response message containing said activation code (AC) and to instruct the provisioning equipment item (50) to prepare the subscription profile following the reception of a profile preparation request received from the authentication system (30).

10. Computer program comprising code instructions for implementing the following steps of the downloading method according to Claim 1, when this program is run by a processor of a mobile terminal:
sending (S21) of a combined authentication and profile transfer request to an authentication system (30), said request containing a user identifier (Id_{A}) of the target mobile terminal;
reception (S35) in return of a response message containing an activation code (AC); and
sending (S41) of a request to download the subscription profile to a provisioning equipment item (50), said download request comprising the activation code.

11. Storage medium, that can be read by a mobile terminal, in which is stored the computer program according to Claim 10.
